# EUROPÄISCHE PATENTSCHRIFT

(11) **EP 1 533 641 B1**
(45) Veröffentlichungstag und Bekanntmachung des Hinweises auf die Patenterteilung: **08.02.2006**
(21) Anmeldenummer: 04026493.9
(22) Anmeldetag: 09.11.2004
(51) Int. Cl.: G02B 21/22, G02B 21/36

(54) **Trinokulartubus für Stereomikroskope**
Trinocular tube for stereomicroscopes
Tube trinoculaire pour des stéreomicroscopes

(30) Priorität: 14.11.2003 DE 10354010
(43) Veröffentlichungstag der Anmeldung: 25.05.2005
(73) Patentinhaber: CARL ZEISS JENA GmbH, 07745 Jena (DE)
(72) Erfinder: Knoblich, Johannes, 07747 Jena (DE); Tielebier, Hanna, 19336 Quitzöbel (DE); Osten, Günter, 07749 Jena (DE); Winterot, Johannes, 07745 Jena (DE)

(56) Entgegenhaltungen:
- DE-A1- 3 318 011
- DE-A1- 3 718 843
- US-A- 4 671 628
- US-A- 4 783 160
- US-A- 5 543 962
- US-A- 5 589 977
- US-A- 5 847 866

## Beschreibung

Die Erfindung bezieht sich auf einen Trinokulartubus, welcher zur Erzielung eines ergonomisch günstigen Einblickwinkels in das Okular innerhalb eines bestimmten Winkelbereiches beliebig einstellbar ist.

Bei der Beobachtung und Dokumentation von Objekten durch ein Stereomikroskop ist es wünschenswert, daß am Stereomikroskoptubus zur Realisierung eines ergonomisch günstigen Einblickwinkels in das Okular der Neigungswinkel des binokularen Schrägeinblicks innerhalb eines begrenzten Schwenkbereiches nach Belieben eingestellt werden kann.

Aus DE 26 54 778 und DE 37 18 843 sowie aus Firmendruckschriften und Verkaufsprogrammen der Firmen Nikon, Leica und Meiji sind schwenkbare Binokulartuben für Stereomikroskope bekannt, die eine Einstellung eines ergonomisch günstigen Einblickwinkels erlauben, jedoch einen integrierten Anschlußstutzen, z. B. für Kameras zur Objektaufnahme, nicht besitzen. Es sind dies u. a. die Firmendruckschriften von Nikon: "Schwenkbare Binokulare" P-BERG bzw. SMZ, von Leica: "Ergotubus" 10 445 822 und von Meiji: "Ergo-Binokularkopf" MA 749.

Stereomikroskoptuben mit integriertem Anschlußstutzen für Kameras besitzen jedoch nur einen Tubus mit festem, nicht verstellbarem Okulareinblickwinkel. Hierzu können beispielsweise der "Trinokulartubus" SZX-Tr30 der Firma Olympus, der "Trinokulare Video/Fototubus" 50% - 10 445 924 sowie der "Trinokulare Video/Fototubus" 100% - 10 446 229 der Firma Leica genannt werden.

In der DE 35 08 306 ist auch für normale Mikroskope ohne Stereostrahlengang die Möglichkeit einer Umlenkung des Strahlenganges zu einem Anschlußstutzen für Kameras beschrieben. Dabei erfolgt die Umlenkung durch einen in den betreffenden Strahlengang ein- und ausschaltbaren Spiegel, welcher vor der Tubusoptik und vor dem Umlenkelement zur Einstellung des Einblickwinkels angeordnet ist.

Weitere Trinokulartuben sind in den Druckschriften US 5 847 866 A, US 5 543 962 A und US 4 783 160 A offenbart.

Der Erfindung liegt die Aufgabe zu Grunde, einen Trinokulartubus für Stereomikroskope mit einem verstellbaren, binokularen Schrägeinblick in das Okular zu schaffen, bei welchem mit einfachen Mitteln mindestens einer der beiden Stereomikroskop-Strahlengänge bei beliebiger Stellung des Schrägeinblickes in einen Kamerastutzen eingeleitet werden kann.

Erfindungsgemäß wird diese Aufgabe bei einem nach dem Oberbegriff des ersten Patentanspruchs ausgebildeten Trinokulartubus mit den im kennzeichnenden Teil dieses Anspruches offenbarten Mitteln gelöst. In den Unteransprüchen sind weitere Ausführungen und Einzelheiten der Erfindung offenbart.

Mit dem erfindungsgemäßen Trinokulartubus werden gleichzeitig eine visuelle Beobachtung des Objektes und eine fotografische oder digitale Aufnahme des Objektes bei einem Stereomikroskop ermöglicht.

So ist es auch von Vorteil, wenn zur Umlenkung des mindestens einen stereomikroskopischen Strahlenganges in den Anschlußstutzen für Kameras das Umlenkelement in den mindestens einen Strahlengang des Stereomikroskops eingebracht ist.

Eine einfache unaufwendige Realisierung der Erfindung ergibt sich, wenn die Schwenkachse der Halterung und die Achse, um welche die zweite Tubuseinheit zusammen mit den Okulartubuseinheiten schwenkbar ist, parallel verlaufen und getrennt voneinander in der ersten Tubuseinheit angeordnet sind.

Mit der Erfindung wird erstmalig ein Trinokulartubus mit einem binokularen Schrägeinblick, dessen Neigungswinkel innerhalb eines begrenzten Schwenkbereiches beliebig einstellbar oder veränderlich ist, und mit in einem Stereokanal auf einfache Art schaltbarem Umlenkelement, das den Strahlengang dieses Stereokanals bei jedem möglichen Neigungswinkel entweder in den neigungswinkelverstellbaren binokularen Schrägeinblick oder in den Anschlußstutzen für Videokameras, digitale oder fotografische Kameras lenkt, realisiert. Diese Lösung ist für den Anwender besonders vorteilhaft, weil in einem einzigen Stereomikroskop beide oben genannten Funktionen miteinander kombiniert werden, ohne daß ein weiterer Tubus benötigt wird.

Die Erfindung soll nachstehend an einem Ausführungsbeispiel näher erläutert werden. In der zugehörigen Zeichnung zeigen
- Fig.1: eine Ausführungsform für eine binokulare, stereomikroskopische Beobachtung mit einer schwenkbaren Halterung für Spiegel und
- Fig.2: eine Ausführungsform mit schwenkbarer Halterung für Spiegel bei umgelenktem Stereostrahlengang.
- Fig.3: die Lage der optischen Elemente des Trinokulartubus bei binokularer Beobachtung,
- Fig.4: die Lage der optischen Elemente des Trinokulartubus bei Umleitung des einen Stereostrahlenganges in einen Anschlußstutzen für Kameras.

In der Beschreibung des Ausführungsbeispiels werden alle Elemente des einen stereomikroskopischen Strahlenganges mit einer Ziffer und dem Buchstaben "a" und die Elemente des zweiten Strahlenganges mit einer Ziffer und dem Buchstaben "b" gekennzeichnet.

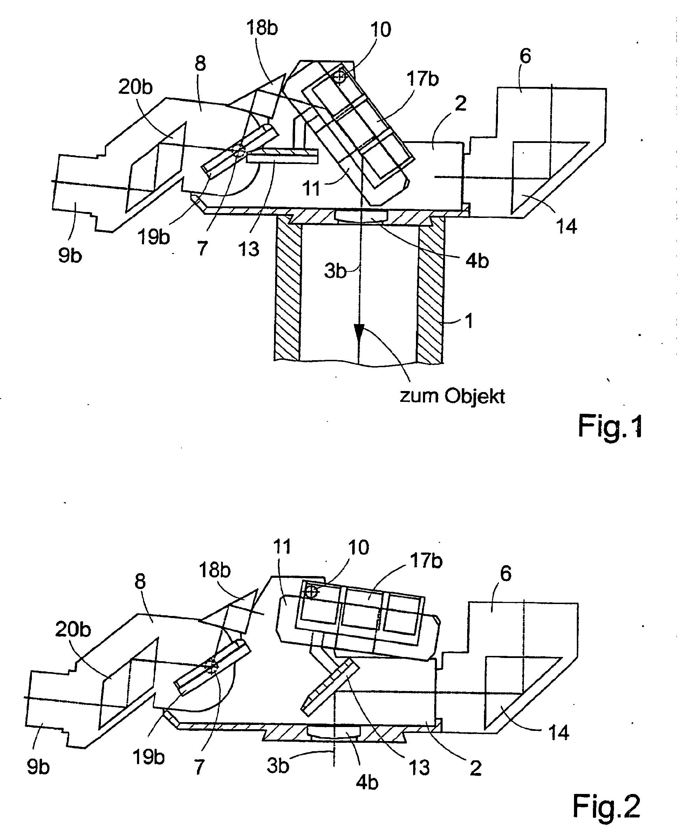

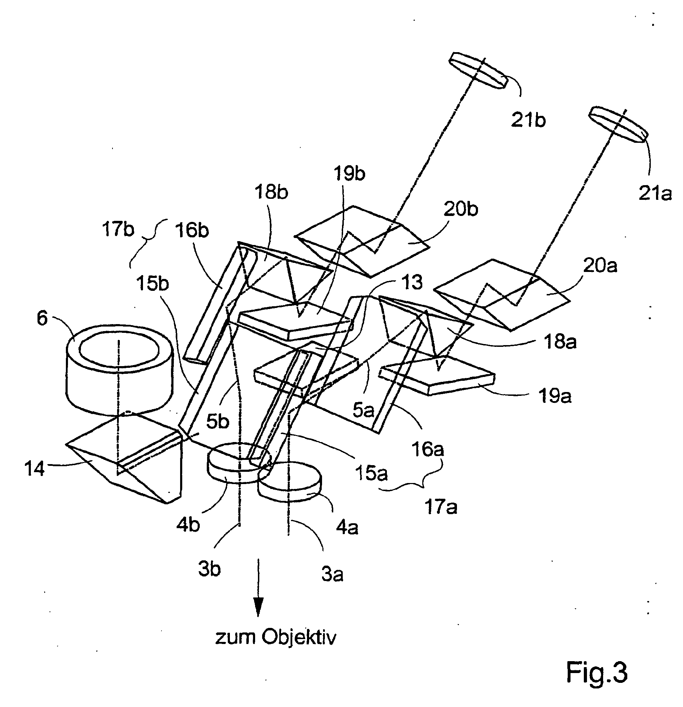

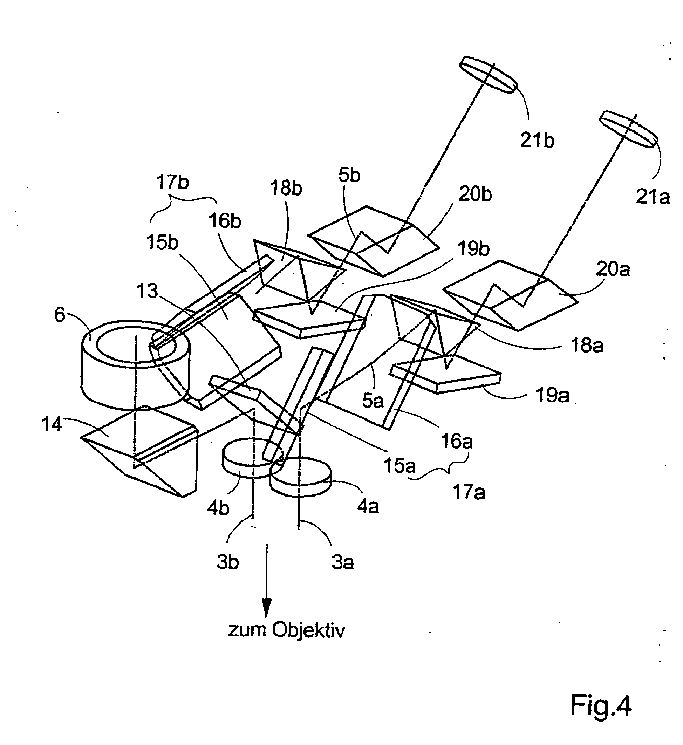

Fig.1 und 2 zeigen den Grundaufbau des erfindungsgemäßen Trinokulartubus in den verschiedenen Funktionsstellungen. Wie Fig.1 entnommen werden kann, ist mit einem Körper 1 eines Stereomikroskopes eine erste Tubuseinheit 2, vorzugsweise auswechselbar, verbunden. In diese erste Tubuseinheit 2 werden die beiden, vom Objektiv (nicht dargestellt) kommenden stereomikroskopischen Strahlengänge 3a und 3b (Fig.3 und 4), deren optische Achsen mit 5a und 5b in den Figuren bezeichnet sind, durch jeweils eine Abbildungslinse 4a und 4b (Fig.3 und 4) eingeleitet. An der ersten Tubuseinheit 2 ist in einem der beiden Strahlengänge, im Ausführungsbeispiel im Strahlengang 3b, ein Anschlußstutzen 6 für das Ansetzen einer Kamera oder eines anderen Aufnahmegerätes vorgesehen. Ebenfalls ist in der Tubuseinheit 2 eine erste Schwenkachse 7 vorgesehen, um welche eine zweite Tubuseinheit 8 schwenkbar gelagert ist, an welcher, einem jeden der Strahlengänge 3a und 3b zugeordnet, jeweils eine Okulartubuseinheit 9a und 9b um die jeweilige optische Achse 5a, 5b zwecks Einstellung auf den Augenabstand des Beobachters drehbar angeordnet ist, wobei die Okulartubuseinheit 9a in Fig.1 und 2 nicht sichtbar ist, da sie in den Fig.1 und 2 hinter der Okulartubuseinheit 9b liegt.

In der ersten Tubuseinheit 2 ist ferner eine um eine zweite Schwenkachse 10 schwenkbare Halterung 11 in mindestens einem der Strahlengänge 3a oder 3b, im Ausführungsbeispiel im Strahlengang 3b, vorgesehen, an welcher, in einer festen räumlichen Relation zueinander, ein aus zwei Spiegeln bestehender Winkelspiegel 17b mit einer offenen Dachkante und ein Umlenkelement 13 in Form eines Spiegels oder eines Umlenkprismas angeordnet sind.

Im Anschlußstutzen 6 ist vorteilhaft ein den Kamerastrahlengang um 90° umlenkendes Umlenkprisma 14 vorgesehen.

In Fig.1 ist die Stellung der Halterung 11 mit dem Winkelspiegel 17b und dem Umlenkelement 13 dargestellt, wie sie bei stereoskopischer Beobachtung vorhanden ist. Fig.2 zeigt die Lage der Halterung 11, wenn einer der stereomikroskopischen Strahlengänge 3b durch das Umlenkelement 13 in den Anschlußstutzen 6 eingeleitet wird.

Die Fig.3 und 4 zeigen den Grundaufbau des optischen Systems des TNT in den beiden Funktionsstellungen. Die vom Körper 1 des Mikroskops kommenden stereomikroskopischen Strahlengänge 3a und 3b durchlaufen die Abbildungslinsen 4a und 4b.

Fig.3 zeigt den optischen Strahlengang des Stereomikroskops bei visueller stereoskopischer Beobachtung. Wie daraus zu entnehmen ist, trifft danach der Strahlengang 3a nacheinander auf die Elemente 15a und 16a eines Winkelspiegels 17a mit offener Dachkante und wird über ein 90°-Prisma 18a und einen Drehspiegel 19a in Abhängigkeit des Neigungswinkels der zweiten Tubuseinheit 8 über ein Rhomboidprisma 20a, welches in der Tubuseinheit 8 angeordnet ist, in das Okular 21a des einen Strahlenganges 3a des Stereomikroskops geleitet.

Der Strahlengang 3b trifft nacheinander auf die Elemente 15b und 15b eines zweiten Winkelspiegels 17b mit offener Dachkante und wird über ein zweites 90°-Prisma und einen weiteren Drehspiegel 19b in Abhängigkeit des Neigungswinkels der zweiten Tubuseinheit 8 über ein weiteres Rhomboidprisma 20b, welches ebenfalls in der Tubuseinheit 8 angeordnet ist, in das Okular 21b des zweiten Strahlenganges 3b des Stereomikroskops geleitet.

In den beiden Okularen 21a und 21b wird bei dieser Anordnung der einzelnen optischen Bauelemente ein aufrechtes und seitenrichtiges Bild des Objektes beobachtet. Bei der in Fig.3 dargestellten Position der beiden Winkelspiegel 17a und 17b mit offener Dachkante wird kein Licht über das Umlenkprisma 14 in den Anschlußstutzen 6 eingeleitet.

Fig.4 zeigt die Position der einzelnen optischen Bauelemente, wenn einer der stereomikroskopischen Strahlengänge, im Ausführungsbeispiel ist es der Strahlengang 3b, in den Anschlußstutzen 6 zwecks Abbildung des Objektes durch eine am am Stutzen 6 angeordnete Aufnahmekamera (nicht dargestellt) eingeleitet wird. Der Aufbau des einen stereomikroskopischen Strahlenganges 3b und die Position der optischen Bauelemente dieses Strahlenganges 3b sind die gleichen wie bei der im Zusammenhang mit Fig.3 beschriebenen Anordnung. Im Strahlengang 3b werden, um diesen Strahlengang in den Anschlußstutzen 6 einzuleiten, durch Schwenken der Halterung 11 um die zweite Achse 10 die Elemente 15b und 16b des Winkelspiegels 17b aus dem Strahlengang 3b entfernt und gleichzeitig das Umlenkelement 13 in den Strahlengang 3b eingeschwenkt.

Mit dem erfindungsgemäßen Trinokulartubus ist es also bei einem Stereomikroskop mit einem binokularen Schrägeinblick, dessen Neigungswinkel innerhalb eines begrenzten Schwenkbereiches beliebig einstellbar oder veränderlich ist, möglich, mit dem in dem einen Mikroskopstrahlengang auf einfache Art umschaltbaren Umlenkelement 13 zu erreichen, daß gleichzeitig und unabhängig von der Winkelstellung des binokularen Schrägeinblickes das Objekt in dem einen Strahlengang 3a visuell beobachtet und gleichzeitig im anderen Strahlengang 3b fotografisch aufgenommen werden kann. So können in einem einzigen Stereomikroskoptubus beide Funktionen miteinander kombiniert werden.

### Bezugszeichenliste

- 1: Körper
- 2: erste Tubuseinheit
- 3a, 3b: Strahlengang
- 4a, 4b: Abbildungslinse
- 5a, 5b: optische Achse
- 6: Anschlußstutzen
- 7: erste Schwenkachse
- 8: zweite Tubuseinheit
- 9a, 9b: Okulartubuseinheit
- 10: zweite Schwenkachse
- 11: Halterung
- 13: Umlenkelement
- 14: Umlenkprisma
- 15a, 15b: Element
- 16a, 16b: Element
- 17a, 17b: Winkelspiegel
- 18a, 18b: 90°-Prisma
- 19a, 19b: Drehspiegel
- 20a, 20b: Rhomboidprisma
- 21a, 21b: Okular

## Patentansprüche

1. Trinokulartubus für Stereomikroskope mit binokularem, winkelverstellbaren Schrägeinblick und zwei stereomikroskopischen Strahlengängen (3a,3b), umfassend in diesen Strahlengängen
- eine erste Tubuseinheit (2), die mit dem Körper (1) des Stereomikroskops verbindbar ist, wobei an dieser ersten Tubuseinheit (2) ein Anschlußstutzen (6) für Kameras angeordnet ist,
- eine zweite Tubuseinheit (8), welche an der ersten Tubuseinheit (2) um eine Achse (7) schwenkbar angeordnet ist und welche mit einer um die optische Achse des jeweiligen Strahlenganges schwenkbaren Okulartubuseinheit (9a,9b) verbunden ist
- und jeweils einen, in jedem stereomikroskopischen Strahlengang angeordneten Winkelspiegel (17a,17b), welcher die eintretenden Lichtstrahlen zur jeweiligen Okulartubuseinheit (9a,9b) hin reflektiert,
- **dadurch gekennzeichnet,**
- **daß** in mindestens einem der stereomikroskopischen Strahlengänge (3b) des Trinokulartubus ein Umlenkelement (13) zur Umlenkung des mindestens einen Strahlengang in Richtung des Anschlußstutzens vorgesehen ist, welches in einer, um eine zweite Schwenkachse (10) schwenkbaren Halterung (11) mit einem der Winkelspiegel (17b) mit einer offenen Dachkante starr verbunden ist
- und **daß** die optische Achse des jeweils auf das in den mindestens einen Strahlengang (3b) eingeschwenkte Umlenkelement (13) auftreffenden Strahlengangs in einer Ebene liegt, in welcher sich auch die optische Achse (5b) des auf den ersten Spiegel (15b) des Winkelspiegels (17b) mit offener Dachkante treffenden stereomikroskopischen Strahlenganges (3b) befindet.

2. Trinokulartubus nach Anspruch 1, **dadurch gekennzeichnet, daß** zur Umlenkung des mindestens einen stereomikroskopischen Strahlenganges (3b) in den Anschlußstutzen (6) für Kameras das Umlenkelement (13b) in den mindestens einen Strahlengang (3b) einschaltbar angeordnet ist.

3. Trinokulartubus nach Anspruch 1, **dadurch gekennzeichnet, daß** die zweite Schwenkachse (10) der Halterung (11) und die erste Schwenkachse (7), um welche die zweite Tubuseinheit (8) zusammen mit den Okulartubuseinheiten (9a, 9b) schwenkbar ist, parallel verlaufen und getrennt voneinander in der ersten Tubuseinheit (2) angeordnet sind.

## Claims

1. Trinocular tube for stereomicroscopes having a binocular, angularly adjustable inclined eyepiece and two stereomicroscopic beam paths (3a, 3b), comprising in these beam paths
- a first tube unit (2) which can be connected to the body (1) of the stereomicroscope, wherein a connection piece (6) for cameras is disposed on this first tube unit (2),
- a second tube unit (8) which is disposed on the first tube unit (2) in such a manner as to be able to pivot about an axis (7) and which is connected to an ocular tube unit (9a, 9b) which can be pivoted about the optical axis of the respective beam path,
- and in each case an angular mirror (17a, 17b) which is disposed in each stereomicroscopic beam path and which reflects the incoming light beams towards the respective ocular tube unit (9a, 9b),
- **characterised in that**
- in at least one of the stereomicroscopic beam paths (3b) of the trinocular tube there is provided a diverting element (13) to divert the at least one beam path in the direction of the connection piece and in a holding device (11) which can be pivoted about a second pivot axis (10) said diverting element is rigidly connected to one of the angular mirrors (17b) having an open roof edge,
- and that the optical axis of the beam path which in each case impinges upon the diverting element (13) which is pivoted into the at least one beam path (3b) lies in a plane, in which there is also located the optical axis (5b) of the stereomicroscopic beam path (3b) which impinges upon the first mirror (15b) of the angular mirror (17b) having an open roof edge.

2. Trinocular tube as claimed in claim 1, **characterised in that** in order to divert the at least one stereomicroscopic beam path (3b) into the connection piece (6) for cameras the diverting element (13b) is disposed such that it can be engaged into the at least one beam path (3b).

3. Trinocular tube as claimed in claim 1, **characterised in that** the second pivot axis (10) of the holding device (11) and the first pivot axis (7), about which the second tube unit (8) together with the ocular tube units (9a, 9b) can be pivoted, extend in parallel and are disposed separately from one another in the first tube unit (2).

## Revendications

1. Tube trinoculaire pour des stéréomicroscopes avec une observation oblique binoculaire, à angle ajustable et deux chemins de rayons stéréomicroscopiques (3a,3b), comprenant dans ces chemins de rayons
- une première unité de tube (2) qui peut être reliée au corps (1) du stéréomicroscope, où est disposé à cette première unité de tube (2) un raccord (6) pour des caméras,
- une deuxième unité de tube (8) qui est disposée à la première unité de tube (2) d'une manière pivotante autour d'un axe (7), et qui est reliée à une unité de tube oculaire (9a,9b) apte à pivoter autour de l'axe optique du chemin de rayons respectif,
- et, à chaque fois, un miroir en angle (17a,17b) disposé dans chaque chemin de rayons stéréomicroscopique, qui réfléchit les rayons de lumière entrants vers l'unité de tube oculaire respective (9a,9b)
**caractérisé**
**en ce qu'**il est prévu dans au moins l'un des chemins de rayons stéréomicroscopiques (3b) du tube trinoculaire un élément de déviation (13) pour dévier au moins un chemin de rayons en direction du raccord, qui est relié rigidement dans un logement (11) apte à pivoter autour d'un deuxième axe de pivotement (10) à l'un des miroirs en angle (17b) avec un chant supérieur ouvert,
et **en ce que** l'axe optique du chemin de rayons incident sur l'élément de déviation (13) pivoté dans au moins un chemin de rayons (3b) se situe dans un plan dans lequel se trouve également l'axe optique (5b) du chemin de rayons stéréomicroscopique (3b) qui est incident sur le premier miroir (15b) du miroir en angle (17b) à chant supérieur ouvert.

2. Tube trinoculaire selon la revendication 1, **caractérisé en ce que** pour la déviation d'au moins un chemin de rayons stéréomicroscopique (3b) dans le raccord (6) pour des caméras, l'élément de déviation (13b) est disposé pour pouvoir être commuté dans au moins un chemin de rayons (3b).

3. Tube trinoculaire selon la revendication 1, **caractérisé en ce que** le deuxième axe de pivotement (10) du logement (11) et le premier axe de pivotement (7), autour duquel la deuxième unité de tube (8) peut être amenée à pivoter conjointement avec les unités de tube oculaire, s'étendent parallèlement et sont disposés séparément l'un de l'autre dans la première unité de tube (2).
